# EUROPÄISCHE PATENTSCHRIFT

(11) **EP 1 302 359 B1**
(45) Veröffentlichungstag und Bekanntmachung des Hinweises auf die Patenterteilung: **07.06.2006**
(21) Anmeldenummer: 01124555.2
(22) Anmeldetag: 13.10.2001
(51) Int. Cl.: B60W 10/06, F02N 11/08

(54) **Verfahren zur Steuerung der Brennkraftmaschine eines Kraftfahrzeuges mit Stop/Start-Funktion**
Vehicle engine automatic start/stop control method
Système automatique d'arrêt et de redémarrage pour un moteur à combustion de véhicule

(43) Veröffentlichungstag der Anmeldung: 16.04.2003
(73) Patentinhaber: Ford Global Technologies, LLC., Dearborn MI 48126 (US)
(72) Erfinder: Busch, Rainer, 52076 Aachen (DE); Spijker, Engbert, 5702 LG Helmond (NL); Seibertz, Achim, 52064 Aachen (DE)
(74) Vertreter: Drömer, Hans-Carsten

(56) Entgegenhaltungen:
- EP-A- 1 028 022
- EP-A- 1 077 149
- EP-A- 1 077 328
- DE-A- 19 958 520
- FR-A- 2 795 770
- US-A- 4 630 577
- US-A- 5 451 820

## Beschreibung

Die Erfindung betrifft ein Verfahren zur Steuerung der Brennkraftmaschine eines Kraftfahrzeuges, wobei die Brennkraftmaschine automatisch abgeschaltet wird, wenn ein auf einen Stillstand hinweisender Fahrzeugzustand detektiert wird. Ferner betrifft die Erfindung eine Steuerung für die Brennkraftmaschine eines Kraftfahrzeuges, welche ein derartiges Verfahren ausführen kann.

Es ist bekannt, Kraftfahrzeuge mit einer Stop/Start-Funktion auszustatten, durch welche die Brennkraftmaschine automatisch bei Vorliegen bestimmter Bedingungen abgeschaltet wird. Insbesondere kann die Brennkraftmaschine abgeschaltet werden, wenn sie sich im Leerlauf befindet und das Fahrzeug steht bzw. eine geringe Geschwindigkeit aufweist. Die Brennkraftmaschine wird automatisch wieder gestartet, wenn das Fahrzeug wieder anfahren soll. Die Stop/Start-Funktion trägt auf diese Weise zu einer Kraftstoffersparnis bei, da die Betriebszeiten des Motors im Leerlauf minimiert werden.

Eine Stop/Start-Funktion der genannten Art wird beispielsweise in der DE 199 50 080 A1 beschrieben. Dabei werden verschiedene spezielle Bedingungen geprüft, um einen Zustand zu detektieren, in dem das Fahrzeug kurzzeitig steht, etwa vor einer Ampel.

Damit die Kraftstoffersparnis durch das Abschalten der Brennkraftmaschine den zusätzlichen Kraftstoffaufwand für das erneute Anlassen der Brennkraftmaschine übersteigt und die Energiebilanz somit positiv ist, muß die Brennkraftmaschine typischerweise für mehr als 20 Sekunden abgeschaltet sein. Diese Bedingung ist jedoch nicht in allen Fällen erfüllt, in denen bei den bekannten Verfahren ein automatisches Abschalten der Brennkraftmaschine erfolgt. Insbesondere können die Stillstandszeiten unter 20 Sekunden liegen und Abschaltungen der Brennkraftmaschine somit unwirtschaftlich sein, wenn sich das Fahrzeug in dichtem Verkehr befindet, wo es zu einem häufigen, kurzzeitigen Stillstand und Anfahren des Fahrzeuges kommt. Auch beim Einparken eines Kraftfahrzeuges kann es zu einem häufigen, kurzzeitigen Stillstand und einem Wiederanfahren kommen, wobei das Anfahren in der Regel noch im Wechsel zwischen Vorwärts- und Rückwärtsgang erfolgt. Erschwerend kommt hinzu, daß übliche Geschwindigkeitssensoren eine geringe Genauigkeit haben, so daß kleine Geschwindigkeiten von typischerweise weniger als 3 km/h als "Stillstand" erkannt werden. Nachfolgend sollen die beschriebenen Situationen mit einem häufigen Wechsel von Stillstand und Anfahren (vorwärts oder rückwärts) als "Stop-and-go-Situation" bezeichnet werden.

Das Abschalten des Motors in Stop-and-go-Situationen ist nicht nur unwirtschaftlich, sondern es vermittelt dem Fahrer auch ein schlechtes Fahrgefühl aufgrund einer mangelnden Kontrolle über das Fahrzeug. Dies gilt auch dann, wenn aufgrund moderner Anlassertypen nur eine verhältnismäßig kurze Zeit für das emeute Anlassen des Motors benötigt wird.

Um ein allzu schnelles Abschalten der Brennkraftmaschine zu verhindern, ist es bekannt, nach einem Fahrzeugstillstand die Brennkraftmaschine für eine gewisse Zeit von typischerweise 2 bis 5 Sekunden weiterlaufen zu lassen, bevor diese abgeschaltet wird. Wenn innerhalb dieser kurzen Zeit somit das Fahrzeug wieder in Bewegung gesetzt wird, wird das zwischenzeitliche Abschalten des Motors unterdrückt. Nachteilig hieran ist jedoch, daß bei etwas längeren Stillständen, die noch unterhalb der 20-Sekunden-Grenze liegen, nach wie vor ein unwirtschaftliches Abschalten erfolgt. Ferner geht die abgewartete Leerlaufzeit in allen anderen Fällen, in denen das Abschalten sinnvoll wäre, im Hinblick auf die Kraftstoffersparnis verloren.

Gemäß einer anderen bekannten Strategie wird nach zweimaligem wiederholten Anlassen der Brennkraftmaschine ohne ein zwischenzeitliches Zurücklegen einer Fahrstrecke die Stop/Start-Funktion außer Kraft gesetzt, bis ein vorgegebener Schwellwert der Fahrzeuggeschwindigkeit überschritten wurde. Nachteilig hieran ist jedoch, daß die zwei durchzuführenden Anlaßvorgänge hinsichtlich der Kraftstoffersparnis verloren gehen.

Aus der EP 1 077 328 A1 ist eine Vorrichtung zum automatischen Abschalten und Neustarten eines Verbrennungsmotors in einem Kraftfahrzeug bekannt, bei welchem in einem Verkehrsstau eine automatische Abschaltung verhindert wird. Das Vorliegen eines Verkehrsstaus wird anhand von Informationen eines Navigationssystems oder durch Auswertung der Geschwindigkeit des Fahrzeugs ermittelt

Aus der EP 1 077 149 A2 ist eine Start-Stopp-Steuerungsvorrichtung bekannt, bei welcher unter bestimmten Bedingungen eine Leerlaufabschaltung und unter weiteren bestimmten dargestellten Bedingungen ein Neustart des Verbrennungsmotors erfolgt. Ein derartiger Neustart erfolgt insbesondere bei Feststellung eines Pumpens der Bremse. In diesem Falle erfolgt keine Unterdrückung der Abschaltung, sondern vielmehr ein Neustarten nach bereits erfolgter Abschaltung.

Vor diesem Hintergrund war es Aufgabe der vorliegenden Erfindung, ein Verfahren zur Steuerung der Brennkraftmaschine eines Kraftfahrzeuges bereitzustellen, welches eine Verbesserung der Kraftstoffersparnis durch eine Stop/Start-Funktion erlaubt.

Diese Aufgabe wird durch ein Verfahren mit den Merkmalen des Anspruches 1 sowie durch ein Steuerungssystem mit den Merkmalen des Anspruchs 9 gelöst. Vorteilhafte Ausgestaltungen sind in den Unteransprüchen enthalten.

Das erfindungsgemäße Verfahren zur Steuerung der Brennkraftmaschine eines Kraftfahrzeuges beinhaltet eine Stop/Start-Funktion, gemäß der die Brennkraftmaschine automatisch abgeschaltet wird, wenn ein auf einen Stillstand des Fahrzeugs hinweisender Fahrzeugzustand detektiert wird. Die Detektierung eines auf einen Stillstand hinweisenden Fahrzeugzustandes kann nach den im Stand der Technik bekannten Verfahren bzw. Regeln erfolgen, also zum Beispiel durch Überprüfung, ob die Fahrzeuggeschwindigkeit (annähernd) Null ist und die Bremse betätigt wird. Das Verfahren ist dadurch gekennzeichnet, daß die automatische Abschaltung der Brennkraftmaschine unterdrückt wird, wenn eine Stop-and-go-Situation detektiert wird. Die Stop-and-go-Situation ist dabei wie vorstehend erläutert durch ein wiederholtes kurzfristiges Anfahren und Abstoppen bzw. durch eine hohe Wahrscheinlichkeit für ein derartiges Fahrverhalten definiert.

Die Detektierung einer Stop-and-go-Situation, welche auf verschiedene, nachfolgend detaillierter beschriebene Arten erfolgen kann, ermöglicht es, während des Vorliegens einer derartigen Situation eine automatische Motorabschaltung zu unterdrücken. Dies hat den Vorteil, daß unwirtschaftliche Abschaltvorgänge, welche typischerweise weniger als 20 Sekunden dauern, durch eine "vorausschauende" Regelungsstrategie vermieden werden. Ferner verbessert sich das Fahrverhalten des Kraftfahrzeuges gerade in den kritischen und anspruchsvollen Stop-and-go-Situationen, da der Fahrer in diesen Situationen jederzeit eine schnelle Reaktion des Antriebssystems zur Verfügung hat. Beim Anfahren an Kreuzungen oder Ampeln oder beim Einparken kommt es daher nicht zu einer durch ein erneutes Anlassen des Motors bedingten Verzögerung.

Gemäß einer spezifischen Realisierung der Detektierung einer Stop-and-go-Situation wird deren Beginn angenommen, wenn festgestellt wird, daß die Bremse des Kraftfahrzeuges innerhalb kurzer Zeitabstände wiederholt betätigt wird, und wenn die Fahrzeuggeschwindigkeit bei der Betätigung der Bremse unter einem vorgegebenen Schwellwert von typischerweise 5 km/h liegt. D.h., daß eine langsame Fahrt mit einem häufigen Betätigen der Bremse als Indiz für eine Stop-and-go-Verkehrssituation angenommen wird. Vorzugsweise kann die Annahme einer Stop-and-go-Situation zusätzlich die Bedingung erfordern, daß zwischen zwei Betätigungen der Bremse eine Betätigung des Gaspedals erfolgt sein muß. Wenn der Beginn einer Stop-and-go-Situation detektiert worden ist, geht die Motorsteuerung in einen Zustand über, in welchem das automatische Abschalten der Brennkraftmaschine (Stop/Start-Funktion) außer Kraft gesetzt ist.

Die vorgegebenen kurzen Zeitabstände, innerhalb derer die Bremse zur Detektierung einer Stop-and-go-Situation betätigt werden muß, liegen vorzugsweise im Bereich von weniger als zwei bis zwanzig, besonders bevorzugt weniger als zwei bis fünf Sekunden. Es hat sich gezeigt, daß derartige Zeitabstände die häufigsten Stop-and-go-Situationen korrekt erfassen.

Der Schwellwert der Fahrzeuggeschwindigkeit, welcher bei den Betätigungen der Bremse nicht überschritten sein darf, damit eine Stop-and-go-Situation angenommen wird, liegt typischerweise zwischen 2 und 10 km/h, besonders bevorzugt zwischen 4 und 8 km/h. Das Fahren mit derartigen geringen Geschwindigkeiten ist charakteristisch für Stop-and-go-Situationen. Ferner sind derartige Geschwindigkeiten mit üblichen Sensoren noch ausreichend genau meßbar.

Das Ende einer aufgrund des Vorliegens einer bestimmten Bedingung angenommenen Stop-and-go-Situation wird vorzugsweise dann angenommen, wenn ein vorgegebener Zeitraum seit dem Beginn der Stop-and-go-Situation vergangen ist. Typischerweise liegt dieser Zeitraum zwischen 1 und 5 Minuten.

Alternativ oder ergänzend kann das Ende einer Stop-and-go-Situation auch dann angenommen werden, wenn die Fahrzeuggeschwindigkeit über einem vorgegebenen Schwellwert liegt und das Gaspedal betätigt wird. Eine derartige Situation deutet darauf hin, daß wieder eine flüssige Verkehrslage vorliegt, so daß die normale Stop/Start-Funktionalität wieder aktiviert werden kann. Der Schwellwert der Fahrzeuggeschwindigkeit liegt dabei typischerweise in dem vorstehend bereits genannten Bereich von 2 bis 10 km/h, besonders bevorzugt von 4 bis 8 km/h.

Das Ende einer Stop-and-go-Situation kann weiterhin dann angenommen werden, wenn nach einem vorgegebenen Zeitraum seit Beginn der Stop-and-go-Situation die Bremse betätigt wird. In diesem Falle liegen Anzeichen dafür vor, daß ein echter, längerer Stillstand des Fahrzeuges eingetreten ist, so daß die Brennkraftmaschine mit Ende der Stop-and-go-Situation automatisch abgeschaltet wird.

Gemäß einer anderen Ausgestaltung der Detektierung einer Stop-and-go-Situation wird die aktuelle räumliche bzw. geographische Position des Kraftfahrzeuges ermittelt und eine Stop-and-go-Situation dann angenommen, wenn sich das Kraftfahrzeug in einer Zone mit Stop-and-go-Verkehr aufhält. Die Ermittlung der geographischen Position des Kraftfahrzeuges kann zum Beispiel mit Hilfe eines Navigationssystems und/oder des globalen Positionierungssystems (GPS) erfolgen. Bei diesem Ansatz wird also nicht aus dem Fahrverhalten auf eine Stop-and-go-Situation geschlossen, sondern aus dem Aufenthaltsort des Kraftfahrzeuges. Dieser wird mit anderweitigen Informationen, etwa aus einer Karte verglichen, um festzustellen, ob sich das Fahrzeug in einem Bereich mit Stop-and-go-Verkehr befindet.

Dabei kann eine Stop-and-go-Situation zum Beispiel dann angenommen werden, wenn sich das Fahrzeug in der Nähe von Fahrbahnkreuzungen, von Ampeln, von Bahnübergängen, von Fußgängerüberwegen oder dergleichen befindet, wo nur kurzzeitige Stillstände auftreten. Solche in digitalen Karten verzeichneten Verkehrszonen können automatisch erkannt werden, und die Stop/Start-Funktion kann dann in derartigen Bereichen abgeschaltet werden, da sie aufgrund eines erwartungsgemäß kurzen Stillstandes in der Regel unwirtschaftlich ist. Des weiteren kann eine Stop-and-go-Situation auf der Basis der ermittelten aktuellen Fahrzeugposition auch in Fahrbahnabschnitten angenommen werden, in denen ein Kraftfahrzeugstau herrscht. Derartige Staus können zum Beispiel dann angenommen werden, wenn es sich bei dem Fahrbahnabschnitt um einen solchen mit einer chronischen Staugefahr handelt. Das Verfahren kann gegebenenfalls auch dynamisch Informationen über Staus auswerten, die etwa von einer Verkehrsleitzentrale übermittelt werden.

Gemäß einer anderen Ausgestaltung der Erfindung wird der Beginn einer Stop-and-go-Situation detektiert, wenn sich der Gangwahlhebel in einer vorgegebenen Stellung befindet. Dabei kann es sich sowohl um den Gangwahlhebel eines Handschaltgetriebes als auch eines Automatikgetriebes handeln. Die Stellung des Gangwahlhebels liefert in der Regel eine wichtige Information über die weitere Absicht des Fahrers, so daß diese Information vorteilhaft zur Kontrolle der Stop/Start-Funktion ausgenutzt werden kann.

Insbesondere kann hierbei der Beginn einer Stop-and-go-Situation detektiert werden, wenn sich der Gangwahlhebel in der Stellung des Rückwärtsganges und/oder bei einem Automatikgetriebe in einer anderen Stellung - z.B. Rückwärts, Neutral, L, M oder Parken - als der normalen Fahrstellung (Drive D) befindet. Die Rückwärtsgang-Stellung des Gangwahlhebels zeigt an, daß der Fahrer rückwärts fährt oder fahren möchte, was ein langsames Fahren und in der Regel ein Manövrieren beinhaltet. Bei einem derartigen Fahrbetrieb ist es unerwünscht, wenn der Motor automatisch abgestellt wird. Auch die von der normalen Fahrstellung abweichenden Stellungen des Gangwahlhebels bei einem Automatikgetriebe stellen ein Indiz für eine Stop-and-go-Situation dar, in der es vorteilhaft ist, die Stop/Start-Funktion abzuschalten.

Die Erfindung betrifft ferner eine Steuerung der Brennkraftmaschine eines Kraftfahrzeuges, welche derart ausgebildet ist, das diese ein Verfahren der vorstehend erläuterten Art ausführen kann. D.h., daß diese Steuerung ein Modul zur Ausführung einer Stop/Start-Funktion beinhaltet, um die Brennkraftmaschine bei Detektierung eines auf einen Stillstand hinweisenden Fahrzeugzustandes abzuschalten. Ferner enthält die Steuerung ein Modul zur Detektierung einer Stop-and-go-Situation, welches derart mit dem Stop/Start-Modul gekoppelt ist, dass es die Stop/Start-Funktion bei Vorliegen einer Stop-and-go-Situation unterdrückt. Vorzugsweise ist das Stop-and-go-Modul dabei mit einem Sensor für die Pedalstellungen von Bremse und gegebenenfalls Gaspedal verbunden, um ein kurzzeitig wiederholtes Betätigen der Bremse (und ggf. des Gaspedals) feststellen zu können. Zusätzlich ist das Stop-and-go-Modul bevorzugt mit einem Sensor für die Fahrzeuggeschwindigkeit verbunden. Des weiteren kann das Modul ein Signal erhalten, welches die Stellung des Gangwahlhebels anzeigt.

Ferner kann das Stop-and-go-Modul zusätzlich mit einem Navigationssystem gekoppelt sein, das z.B. einen GPS-Empfänger aufweist. Aus dem Vergleich der von diesem System ermittelten aktuellen Fahrzeugposition mit Daten einer gespeicherten digitalen Karte oder einer Verkehrsleitzentrale kann das Modul dann feststellen, ob sich das Fahrzeug in einem für Stop-and-go-Verkehr besonders anfälligen Bereich befindet oder nicht.

Im Folgenden wird die Erfindung anhand der Figuren beispielhaft näher erläutert. Es zeigen:
- Figur 1: schematisch den Antriebsstrang eines Kraftfahrzeuges und
- Figuren 2-4: Zustandsdiagramme für verschiedenen erfindungsgemäße Motorsteuerungen mit Stop/Start-Funktion.

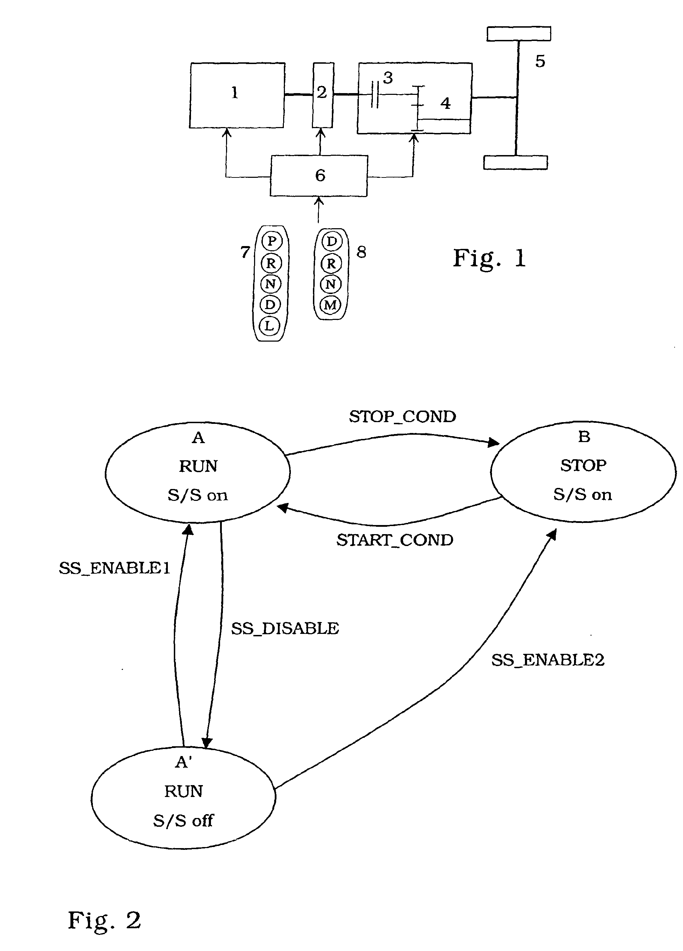

In Figur 1 ist der Antriebsstrang eines Kraftfahrzeuges schematisch dargestellt, welcher der Reihe nach aus einer Brennkraftmaschine 1, einem Anlasser 2, einer Kupplung 3, einem Getriebe 4 sowie einer Radachse 5 besteht. Bei dem Anlasser 2 handelt es sich um einen modernen Typ, welcher die Brennkraftmaschine 1 innerhalb weniger hundert Millisekunden vom Stillstand auf die Leerlaufdrehzahl (typischerweise 800 U/min) beschleunigen kann. Der Anlasser 2 wird wegen seiner integrierten Generatorfunktion oft auch als Starter-Generator (S/A) bezeichnet.

Die hohe Starterleistung kann vorteilhaft dazu eingesetzt werden, eine Stop/Start-Funktion zu verwirklichen. Dabei wird die Brennkraftmaschine 1 bei Stillständen, etwa vor einer Ampel, abgeschaltet, um Kraftstoff zu sparen. Beim Anfahren kann der Motor dann mit Hilfe des starken Anlassers 2 fast verzögerungslos wieder gestartet werden. Das Abschalten der Brennkraftmaschine 1 durch die Stop/Start-Funktion wird in der Regel auf der Basis der gemessenen Fahrzeuggeschwindigkeit v sowie einer Betätigung der Bremse gesteuert. Wenn die Fahrzeuggeschwindigkeit v (nahezu) Null ist und die Bremse betätigt wird, wird die Brennkraftmaschine 1 nach einer kurzen Leerlaufzeit von typischerweise 3 s abgeschaltet. Darüber hinaus können auch andere Größen Einfluß auf die Stop/Start-Funktion ausüben. So kann z. B. eine ausreichend hohe Betriebstemperatur der Brennkraftmaschine 1 als Voraussetzung dafür herangezogen werden, daß diese automatisch abgeschaltet wird. Nachteilig bei den bekannten Stop/Start-Funktionen ist jedoch, daß diese in Stop-and-go-Situationen - wie etwa bei zähflüssigem Verkehr oder während eines Parkmanövers - die Brennkraftmaschine 1 abschalten können, obwohl dies unwirtschaftlich und für das Fahrverhalten ungünstig ist.

In Figur 1 sind ferner zwei typische Konfigurationen 7 und 8 für die Auswahlstellungen des Ganghebels eines Automatikgetriebes dargestellt, wobei die erste Konfiguration 7 die Stellungen P (parken), R (rückwärts), N (neutral), D (fahren) und L (kleinere Gänge) und die zweite Konfiguration 8 die Stellungen D, R, N und M aufweist.

In Figur 2 ist ein erstes Schema zur Implementation einer erfindungsgemäß modifizierten Stop/Start-Funktion dargestellt, weiche die vorstehend genannten Nachteile bei Stop-and-go-Situationen vermeidet.

Während des normalen Betriebes der Brennkraftmaschine befindet sich die Motorsteuerung im Zustand A ("RUN"), in dem die Stop/Start-Funktion aktiv ist ("S/S on"). Unter der Wirkung der Stop/Start-Funktion kann vom Zustand A zum Zustand B übergegangen werden, wenn eine entsprechende Stop-Bedingung STOP_COND erfüllt ist, z.B. wenn die Fahrzeuggeschwindigkeit nahe oder gleich Null ist und die Bremse betätigt wird. In einem derartigen Falle, der auf einen Stillstand des Fahrzeugs hindeutet, wird der Zustand B ("STOP") angenommen, in welchem der Motor abgeschaltet ist. Gleichzeitig werden von der nach wie vor aktiven Stop/Start-Funktion ("S/S on") die Pedale überwacht, und der Zustand B wird unter Rücksprung zu A wieder verlassen, wenn eine entsprechende Bedingung START_COND erfüllt ist, z.B. wenn die Bremse freigegeben oder das Gaspedal aktiviert wird.

Bei dem geschilderten, dem Stand der Technik entsprechenden Verfahren kann es vorkommen, daß der Motor für Zeitintervalle abgestellt wird, die weniger als 20 Sekunden lang sind. Ein derartiges kurzes Abstellen des Motors ist indes unwirtschaftlich und sollte daher vermieden werden. Zu diesem Zweck wird erfindungsgemäß ein Stop-and-go-Zustand A' eingeführt, in welchem die Abschaltung des Motors unterdrückt ist ("S/S off"). Der Stop-and-go-Zustand A' wird aus dem Normalzustand A heraus angenommen, wenn eine Bedingung SS_DISABLE erfüllt ist. Diese kann zum Beispiel dann erfüllt sein, wenn die Bremse innerhalb von Zeitabständen von weniger als drei Sekunden betätigt, freigegeben und erneut betätigt wird, und wenn dabei die Fahrzeuggeschwindigkeit weniger als 5 km/h beträgt. Ein derartiges Fahrverhalten deutet auf eine Stop-and-go-Situation hin, in welcher eine Abschaltung des Motors ineffizient wäre.

Der Stop-and-go-Zustand A' wird mit einem Rücksprung zum Normalzustand A wieder verlassen, wenn eine entsprechende erste Bedingung SS_ENABLE1 erfüllt ist. Diese kann z.B. darin bestehen, daß die Fahrzeuggeschwindigkeit größer als 5 km/h ist und gleichzeitig das Gaspedal betätigt wird, oder daß ein vorgegebenes längeres Zeitintervall seit Eintreten in den Zustand A' verstrichen ist.

Des weiteren kann der Stop-and-go-Zustand A' mit einem Sprung zum Abschaltzustand B verlassen werden, wenn eine zweite Bedingung SS_ENABLE2 erfüllt ist. Diese kann z. B. darin bestehen, daß das genannte längere Zeitintervall seit Beginn des Zustandes A' verstrichen ist und am Ende dieses Zeitintervalls die Bremse betätigt wird.

Die Bedingungen für die Übergänge in Figur 2 sind nachfolgend tabellarisch zusammengefaßt:

| | |
|---|---|
| Variable ... | ... ist WAHR, wenn |
| STOP_COND | *v* = 0 |
| | UND |
| | Bremse betätigt |
| START_COND | Bremse losgelassen |
| | ODER |
| | Gaspedal betätigt |
| SS_DISABLE | Bremse wird losgelassen und innerhalb von 5 s wieder betätigt |
| | UND |
| | v <= 5 km/h |
| SS_ENABLE1 | (v> 5 km/h UND Gaspedal betätigt) |
| | ODER |
| | Wartezeit beendet |
| SS_ENABLE2 | Bremse betätigt |
| | UND |
| | Wartezeit beendet |

Die in der Tabelle angeführten Parameter der Fahrzeuggeschwindigkeit *v* und der Zeitdauern sind nur beispielhaft zu verstehen und können je nach Bedarf verschieden eingesetzt bzw. optimiert werden. Ferner kann der Stop-and-go-Zustand A' alternativ oder nach einem zusätzlichen Kriterium auch in Abhängigkeit von der Fahrzeugposition angenommen werden. Hierbei kann zum Beispiel ein Globales Positionierungssystem (GPS) die Fahrzeugposition erkennen und einen Übergang in den Zustand A' einleiten, wenn sich das Fahrzeug in einem Bereich mit Stop-and-go-Verkehr befindet.

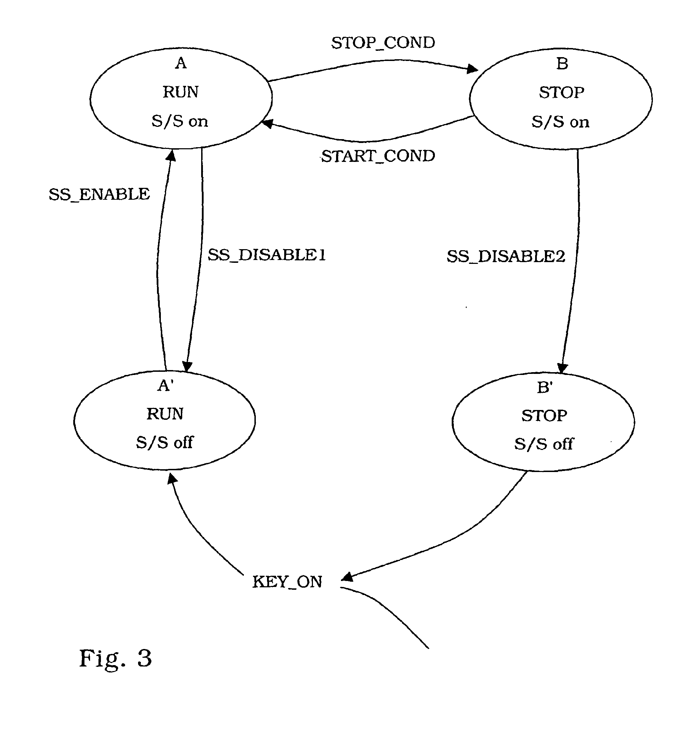

Figur 3 zeigt ein zweites alternatives Regelungsschema, welches in Verbindung mit einem Automatikgetriebe 7 gemäß Figur 1 zum Einsatz kommt. Charakteristisch für dieses Schema ist es, daß die Stellung des Gangwahlhebels ausgewertet wird, um eine eventuelle Stop-and-go-Situation zu erkennen und daraufhin die Stop/Start-Funktion zu deaktivieren.

Die Bedeutung der Zustände A, B und A' ist dieselbe wie in Figur 2. Abweichend von Figur 2 ist jedoch ein zusätzlicher Zustand B' ("STOP") vorhanden, in welchem der Motor von der Stop/Start-Funktion ausgeschaltet worden ist und gleichzeitig die Stop/Start-Funktion deaktiviert ist ("S/S off"). Dieser Zustand B' kann vom Zustand B aus angenommen werden, wenn die Bedingung SS_DISABLE2 erfüllt ist. Ferner kann dieser Zustand nur wieder verlassen und der Motor gestartet werden, wenn der Zündschlüssel betätigt wird ("KEY_ON"). Nach einer derartigen Betätigung des Zündschlüssels fährt die Motorsteuerung im Zustand A' fort.

Die Bedingungen für die Übergänge in Figur 3 sind nachfolgend tabellarisch zusammengefasst:

| | |
|---|---|
| Variable ... | ... ist WAHR, wenn |
| STOP_COND | *v* = 0 |
| | UND |
| | Bremse betätigt |
| START_COND | Bremse losgelassen |
| | ODER |
| | Gaspedal betätigt |
| | ODER |
| | Gangwahlhebel in Stellung R oder L |
| SS_DISABLE1 | Gangwahlhebel in Stellung R oder L |
| SS_DISABLE2 | Gangwahlhebel in Stellung P |
| SS_ENABLE | Gangwahlhebel in Stellung D oder N |

Die in der Tabelle angeführten Bedingungen für STOP_COND oder START_COND sowie die Parameter der Fahrzeuggeschwindigkeit *v* und der Zeitdauern sind nur beispielhaft zu verstehen und können je nach Bedarf verschieden eingesetzt bzw. optimiert werden.

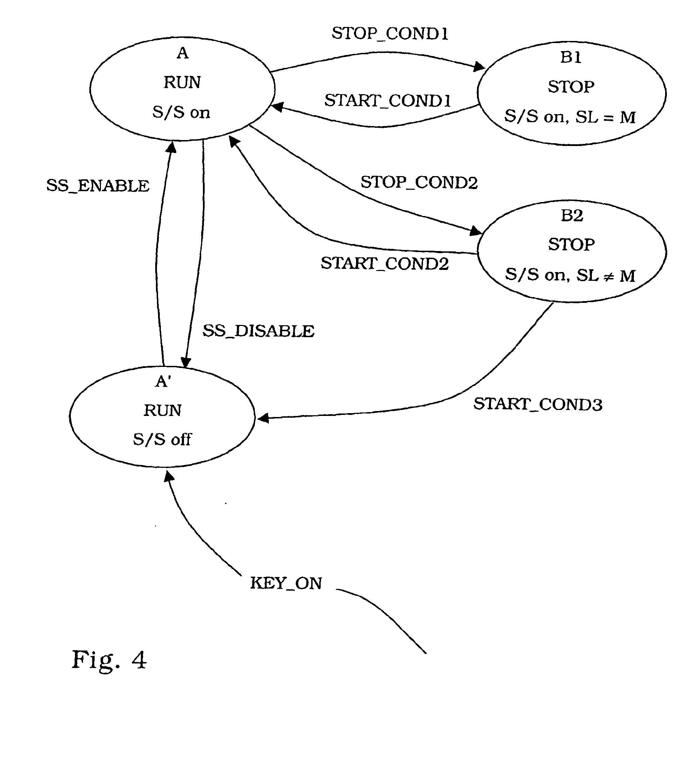

Figur 4 zeigt ein drittes alternatives Regelungsschema, welches in Verbindung mit einem Automatikgetriebe 8 gemäß Figur 1 zum Einsatz kommt. Auch bei diesem Schema wird die Stellung des Gangwahlhebels ausgewertet, um eine eventuelle Stop-and-go-Situation zu erkennen und daraufhin die Stop/Start-Funktion zu deaktivieren.

Die Bedeutung der Zustände A, A' und KEY_ON ist dieselbe wie in Figur 2 bzw. 3. Abweichend von den vorangegangenen Figuren ist jedoch der Zustand mit durch die Stop/Start-Funktion ausgeschaltetem Motor ("STOP") in zwei Zustände B1 und B2 aufgeteilt, je nachdem, ob sich der Gangwahlhebel in der Stellung M befindet (B1) oder nicht (B2). Vom letztgenannten Zustand B2 aus kann in den Zustand A' (Motor an, Stop/Start-Funktion aus) gesprungen werden, wenn die Bedingung START_COND3 erfüllt ist.

Die Bedingungen für die Übergänge in Figur 4 sind nachfolgend tabellarisch zusammengefaßt:

| | |
|---|---|
| Variable ... | ... ist WAHR, wenn |
| STOP_COND1 | v = 0 |
| | UND |
| | Bremse betätigt |
| | UND |
| | Gangwahlhebel in Stellung M (nicht R) |
| STOP_COND2 | *v* = 0 |
| | UND |
| | Bremse betätigt |
| | UND |
| | Gangwahlhebel nicht in Stellung M oder R |
| START_COND1 | Bremse losgelassen |
| | ODER |
| | Gaspedal betätigt |
| START_COND2 | (Bremse losgelassen |
| | ODER |
| | Gaspedal betätigt) |
| | UND |
| | Gangwahlhebel nicht in Stellung M oder R |
| START_COND3 | Gangwahlhebel in Stellung M oder R |
| SS_DISABLE | Gangwahlhebel in Stellung R |
| SS_ENABLE | Gangwahlhebel in Stellung D oder N oder M |
| | UND |
| | v > Schwellwert, z.B. 5 km/h |

Die in der Tabelle angeführten Bedingungen sowie Parameter sind wiederum nur beispielhaft zu verstehen und können je nach Bedarf verschieden eingesetzt bzw. optimiert werden.

Charakteristisch für das Verfahren gemäß Figur 4 ist demnach, daß die Stop/Start-Funktion abgeschaltet wird (Zustand A'), wenn bei laufendem oder abgeschalteten Motor der Rückwärtsgang R oder bei abgeschaltetem Motor der M-Gang eingelegt wird.

## Patentansprüche

1. Verfahren zur Steuerung der Brennkraftmaschine (1) eines Kraftfahrzeuges, wobei die Brennkraftmaschine automatisch abgeschaltet wird, wenn ein auf einen Stillstand hinweisender Fahrzeugzustand (STOP_COND, STOP_COND1, STOP_COND2) detektiert wird, wobei
die automatische Abschaltung unterdrückt wird, wenn eine Stop-and-go-Situation (SS_DISABLE, SS_DISABLE1, SS_DISABLE2) mit einem kurzfristig wiederholten Anfahren und Abstoppen detektiert wird,
**dadurch gekennzeichnet, daß**
der Beginn einer Stop-and-go-Situation (SS_DISABLE) detektiert wird, wenn die Bremse des Kraftfahrzeuges innerhalb kurzer Zeitabstände wiederholt und im Wechsel mit dem Gaspedal betätigt wird, und wenn die Fahrzeuggeschwindigkeit bei der Bremsbetätigung unter einem vorgegebenen Schwellwert liegt.

2. Verfahren nach Anspruch 1,
**dadurch gekennzeichnet, daß**
die Bremse mit Zeitabständen von weniger als zwei bis zwanzig, besonders bevorzugt weniger als zwei bis fünf Sekunden wiederholt betätigt wird.

3. Verfahren nach Anspruch 1 oder 2 ,
**dadurch gekennzeichnet, daß**
der Schwellwert der Fahrzeuggeschwindigkeit 2 bis 10 km/h, vorzugsweise 4 bis 8 km/h beträgt.

4. Verfahren nach einem der Ansprüche 1 bis 3,
**dadurch gekennzeichnet, daß**
das Ende einer Stop-and-go-Situation (SS_ENABLE1, SS_ENABLE2) angenommen wird, wenn ein vorgegebener Zeitraum seit dem Beginn vergangen ist und/oder wenn die Fahrzeuggeschwindigkeit über einem vorgegebenen Schwellwert liegt und das Gaspedal betätigt wird.

5. Verfahren nach einem der Ansprüche 1 bis 4,
**dadurch gekennzeichnet, daß**
die aktuelle räumliche Position des Kraftfahrzeuges ermittelt und eine Stop-and-go-Situation angenommen wird, wenn sich das Kraftfahrzeug in einer räumlichen Zone mit Stop-and-go-Verkehr aufhält.

6. Verfahren nach Anspruch 5,
**dadurch gekennzeichnet, daß**
eine räumliche Zone mit Stop-and-go-Verkehr angenommen wird in der Nähe von Fahrbahnkreuzungen, Ampeln, Bahnübergängen, Fußgängerüberwegen und/oder in Fahrbahnabschnitten mit einem Kraftfahrzeugstau.

7. Verfahren nach einem der Ansprüche 1 bis 6,
**dadurch gekennzeichnet, daß**
der Beginn einer Stop-and-go-Situation (SS_DISABLE, SS_DISABLE1, SS_DISABLE2 START_COND) detektiert wird, wenn sich der Gangwahlhebel in einer vorgegebenen Stellung befindet.

8. Verfahren nach Anspruch 7,
**dadurch gekennzeichnet, daß**
der Beginn einer Stop-and-go-Situation (SS_DISABLE, SS_DISABLE1, SS_DISABLE2 START_COND) detektiert wird, wenn sich der Gangwahlhebel in der Stellung des Rückwärtsganges (R) und/oder bei einem Automatikgetriebe in anderen Stellung (R, N, L, M, P) als der Fahrstellung (D) befindet.

9. Steuerungssystem für die Brennkraftmaschine eines Kraftfahrzeuges,
**dadurch gekennzeichnet, daß**
dieses derart ausgebildet ist, dass dieses ein Verfahren nach einem der Ansprüche 1 bis 8 ausführen kann.

## Claims

1. Method for controlling the internal combustion engine (1) of a motor vehicle, the internal combustion engine being automatically switched off if a vehicle state (STOP_COND, STOP_COND1, STOP_COND2) which indicates a standstill is detected, wherein the automatic switching off is suppressed if a stop-and-go situation (SS_DISABLE, SS_DISABLE1, SS_DISABLE2) with stopping and starting repeating at brief intervals is detected **characterized in that** the start of a stop-and-go situation (SS_DISABLE) is detected if the brake of the motor vehicle is repeatedly activated within brief intervals, alternating with the gas pedal, and if the vehicle velocity when the brake is activated is below a predefined threshold value.

2. Method according to Claim 1, **characterized in that** the brake is activated repeatedly at intervals of less than two to twenty, particularly preferably less than two to five seconds.

3. Method according to Claims 1 or 2, **characterized in that** the threshold value of the vehicle velocity is 2 to 10 km/h, preferably 4 to 8 km/h.

4. Method according to one of Claims 1 to 3, **characterized in that** the end of a stop-and-go situation (SS_ENABLE1, SS_ENABLE2) is assumed if a predefined time period has passed since the start and/or if the vehicle velocity is above a predefined threshold value and the gas pedal is activated.

5. Method according to one of Claims 1 to 4, **characterized in that** the current spatial position of the motor vehicle is determined, and a stop-and-go situation is assumed if the motor vehicle is in a spatial zone with stop-and-go traffic.

6. Method according to Claim 5, **characterized in that** a spatial zone with stop-and-go traffic is assumed in the vicinity of carriageway intersections, traffic lights, grade crossings, pedestrian crossings and/or in sections of carriageway with a tailback of motor vehicles.

7. Method according to one of Claims 1 to 6, **characterized in that** the start of a stop-and-go situation (SS_DISABLE, SS_DISABLE1, SS_DISABLE2 START_COND) is detected if the gear shift lever is in a predefined position.

8. Method according to Claim 7, **characterized in that** the start of a stop-and-go situation (SS_DISABLE, SS_DISABLE1, SS_DISABLE2 START_COND) is detected if the gear shift lever is in the reverse gear (R) position and/or, in the case of an automatic transmission, in a position (R, N, L, M, P) other than the drive position (D).

9. Control system for the internal combustion engine of a motor vehicle, **characterized in that** said control system is embodied in such a way that it can carry out a method according to one of Claims 1 to 8.

## Revendications

1. Procédé de commande du moteur à combustion interne (1) d'un véhicule automobile, dans lequel le moteur à combustion interne est débranché automatiquement lorsqu'un état du véhicule (STOP_COND, STOP_COND1, STOP_COND2) qui indique l'arrêt est détecté, le débranchement automatique étant supprimé lorsqu'une situation de démarrage - arrêt ("stop and go") (SS_DISABLE, SS_DISABLE1, SS_DISABLE2) qui présente des démarrages et des arrêts répétés à de courts intervalles est détectée, **caractérisé en ce que** le début d'une situation de démarrage - arrêt (SS_DISABLE) est détecté lorsque les freins du véhicule sont actionnés de manière répétée à de courts intervalles de temps en alternance avec la pédale de gaz et lorsque la vitesse du véhicule est inférieure à une valeur de seuil lors de l'actionnement des freins.

2. Procédé selon la revendication 1, **caractérisé en ce que** les freins sont actionnés de manière répétée à des intervalles de temps plus courts que deux à vingt secondes et de manière particulièrement préférable plus courts que deux à cinq secondes.

3. Procédé selon les revendications 1 ou 2, **caractérisé en ce que** la valeur de seuil de la vitesse du véhicule est de 2 à 10 km/h et de préférence de 4 à 8 km/h.

4. Procédé selon l'une des revendications 1 à 3, **caractérisé en ce que** la fin d'une situation de démarrage - arrêt (SS-ENABLE1, SS_ENABLE2) est supposée lorsqu'un intervalle de temps prédéterminé s'est écoulé depuis le début et/ou lorsque la vitesse du véhicule est supérieure à une valeur de seul prédéterminée et que la pédale de gaz est actionnée.

5. Procédé selon l'une des revendications 1 à 4, **caractérisé en ce que** la position spatiale instantanée du véhicule automobile est déterminée et une situation de démarrage - arrêt est supposée lorsque le véhicule automobile se maintient dans une zone spatiale dans laquelle le trafic est en démarrage - arrêt.

6. Procédé selon la revendication 5, **caractérisé en ce que** l'on suppose une zone spatiale à trafic en démarrage - arrêt à proximité de croisements de voies, de feux de signalisation, de passages à niveau, de traversées de passage pour piétons et/ou dans des parties de la chaussée encombrées par des véhicules automobiles.

7. Procédé selon l'une des revendications 1 à 6, **caractérisé en ce que** le début d'une situation de démarrage - arrêt (SS_DISABLE, SS_DISABLE1, SS_DISABLE2 START_COND) est détecté lorsque le levier du changement de vitesse se trouve dans une position prédéterminée.

8. Procédé selon la revendication 7, **caractérisé en ce que** le début d'une situation de démarrage - arrêt (SS_DISABLE, SS_DISABLE1, SS_DISABLE2 START_COND) est détecté lorsque le levier du changement de vitesse se trouve en position de marche arrière (R) et/ou, pour une transmission automatique, dans une autre position (R, N, L, M, P) que la position de roulage (D).

9. Système de commande du moteur à combustion interne d'un véhicule automobile, **caractérisé en ce que** ce dernier est configuré de manière à pouvoir exécuter un procédé selon l'une des revendications 1 à 8.
